# EUROPÄISCHE PATENTSCHRIFT

(11) **EP 2 555 394 B1**
(45) Veröffentlichungstag und Bekanntmachung des Hinweises auf die Patenterteilung: **14.10.2015**
(21) Anmeldenummer: 11176285.2
(22) Anmeldetag: 02.08.2011
(51) Int. Cl.: H02K 21/14, H02K 21/24, B30B 1/26, H02K 7/14, H02K 16/00

(54) **Elektrischer Antrieb für eine Presse**
Electric drive for a press
Engrenage électrique pour une presse

(43) Veröffentlichungstag der Anmeldung: 06.02.2013
(73) Patentinhaber: Siemens Aktiengesellschaft, 80333 München (DE)
(72) Erfinder: Fokken, Mike, 91056 Erlangen (DE); Sporbert, Thilo, 91220 Schnaittach (DE)

(56) Entgegenhaltungen:
- WO-A1-2011/054486
- DE-A1-102010 031 100
- US-A1- 2007 228 860
- US-A1- 2009 021 096

## Beschreibung

Die Erfindung liegt im Bereich der Umformtechnik und betrifft eine Presse mit einem elektrischen Antrieb, bei dem Primärund Sekundärteil als Segmente ausgebildet sind.

Bei Servopressenapplikationen werden sehr große Drehmomente an der Exzenterwelle benötigt. Da der Radius der Läuferscheibe in unmittelbarer Beziehung zu dem erzeugbaren Drehmoment steht, werden im Stand der Technik häufig Segmentmotoren verwendet, da deren Segmente in großem Radius angeordnet werden können. Oft werden mehrere Segmentmotoren parallel geschaltet. Eine solche Parallelschaltung ist vergleichsweise aufwendig. Außerdem wird sehr viel Bauraum benötigt. Die Anwendung von Segmentmotoren wird beispielsweise in DE 10 2010 031 100 A1 und in WO 2011/054486 A1 beschrieben.

In US 2007/0228860 A1 und US 2009/0021096 A1 sind herkömmliche Torquemotoren mit Antriebselementen beschrieben, die axial und radial angeordnet sind.

Eine Aufgabe der vorliegenden Erfindung ist es, eine Presse mit einem Antrieb zum Erzeugen großer Drehmomente bei gleichzeitig kompakter Bauform des verwendeten Antriebs bereitzustellen. Diese Aufgabe wird durch eine Presse nach Anspruch 1 gelöst. Vorteilhafte Ausführungen der Erfindung sind in den Unteransprüchen angegeben.

Erfindungsgemäß wird bei dem vorgeschlagenen Antrieb das Prinzip des Segmentmotors beibehalten, wodurch große Radien mit einer entsprechenden Anordnung der Antriebssegmente bereitgestellt werden können. Es sind sowohl die Antriebselemente des Stators, als auch die Antriebselemente des Rotors in Segmente unterteilt. Es wird vorgeschlagen, alle zur Verfügung stehenden Flächen des Rotors zur Drehmomentgewinnung zu verwenden. Anders ausgedrückt wird der Rotor sowohl radial, als auch axial mit Antriebssegmenten bestückt. Die entsprechenden Antriebssegmente der Statoren sind entsprechend den am Rotor angeordneten Segmenten in üblicher Art und Weise platziert.

Im Einzelnen weist der mit einer anzutreibenden Welle verbundene Rotor an seinem Umfang radiale Antriebssegmente und an wenigstens einer seiner Stirnseiten axiale Antriebssegmente auf. Zugleich ist ein erster Stator vorgesehen, dessen Antriebssegmente mit den radialen Antriebssegmenten des Rotors einen radialen Segmentmotor bilden. Zusätzlich ist wenigstens ein zweiter Stator vorgesehen, dessen Antriebssegmente mit den axialen Antriebssegmenten an der wenigstens einen Stirnseite des Rotors wenigstens einen axialen Segmentmotor bilden.

Anders ausgedrückt wird ein elektrischer Antrieb mit einem einen Stator und einen Rotor aufweisenden Radialmotor und mit wenigstens einem Primärteile und Sekundärteile aufweisenden Axialmotor vorgeschlagen, wobei die Primärteile oder Sekundärteile des wenigstens einen Axialmotors an zumindest einer der Stirnseiten des Rotors des Radialmotors angebracht sind.

Im Ergebnis wird ein Antrieb mit wenigstens zwei miteinander kombinierten Motoren mit gemeinsamer Drehachse bereitgestellt. Anders ausgedrückt wird das Drehmoment über den gemeinsamen Rotor auf ein und dieselbe Welle aufgebracht.

Für die Erfindung nicht wesentlich ist, ob es sich hierbei um einen Innenläufer- oder Außenläufermotor handelt.

Durch die Verwendung von Segmentmotoren mit großem Radius wird die Erzeugung großer Drehmomente gewährleistet. Gleichzeitig wird durch die Kombination von Radial- und Axialmotoren eine besonders kompakte Bauform des Antriebs erreicht. Dadurch, dass der an wenigstens einer Stirnseite des Rotors ausgebildete axiale Segmentmotor in axialer Richtung besonders dünn ist, können Antriebe mit sehr kurzer Baulänge hergestellt werden. In der Einbaulage steht der Motor im Vergleich mit aus dem Stand der Technik bekannten Lösungen nicht mehr so weit aus der Umformmaschine hinaus, wodurch die Vibrationsanfälligkeit des Gesamtsystems verringert wird.

Da die benötigten großen Drehmomente häufig bereits durch einen einzigen erfindungsgemäßen Motor bereitgestellt werden können, ist in diesen Fällen keine Parallelschaltung mehrerer Segmentmotoren mehr erforderlich. Es wird daher auch nur ein einziges Gehäuse, eine Steuerung usw. benötigt. Dies führt nicht nur zu einer Vereinfachung, sondern auch zu Kosteneinsparungen in den Bereichen Lagerung, Montage usw.

Besonders vorteilhaft ist es, wenn der Rotor axiale Antriebssegmente an beiden Stirnseiten aufweist. Durch die Verwendung von zwei zweiten Statoren können dann zwei axiale Segmentmotoren bereitgestellt werden, so dass sich insgesamt drei Motoren mit gemeinsamer Drehachse ergeben. Dies stellt die optimale Ausnutzung des zur Verfügung stehenden Bauraums dar. Bei lediglich einseitiger Montage ist vorzugsweise auf der gegenüberliegenden Stirnseite ein Gegengewicht zur Vermeidung einer Unwucht vorgesehen.

Ein konstruktiv besonders einfacher Aufbau des Antriebs ist möglich, wenn es sich bei den an dem Rotor angebrachten Antriebssegmenten ausschließlich um Permanentmagnete (Sekundärteil) und bei den an den Statoren angebrachten Antriebssegmenten um Wicklungen bzw. Spulen (Primärteil) handelt.

Als besonders vorteilhaft hat sich die Verwendung des erfindungsgemäßen Antriebs für Exzenterpressen erwiesen, wobei sich bei dem Antrieb um einen Servoantrieb handelt. Die Erfindung ist jedoch nicht auf Antriebe für Pressen mit Servoantriebstechnik beschränkt. Sie kann auch für Antriebe anderer Pressen eingesetzt werden.

Erfindungsgemäß ist der radiale Segmentmotor oder der wenigstens eine axiale Segmentmotor nur teilbestückt. Vorzugsweise ist dabei nur derjenige Teilbereich bestückt, der dem Umformbereich (Arbeitsbereich) der Presse entspricht. Durch eine Teilbestückung wird ein Antrieb bereitgestellt, der in der Lage ist, ein sehr großes Drehmoment zu erzeugen, dieses Drehmoment jedoch nicht während der gesamten Laufzeit des Antriebs, sondern nur zeitweise, insbesondere beim Durchlaufen des Umformbereiches, benötigt wird.

So ist es beispielsweise möglich, den erfindungsgemäßen Antrieb als Zusatzmotor in Kombination mit einem herkömmlichen Pressenmotor zu betreiben (Beispiel, nicht Teil der beanspruchten Erfindung), wobei der Zusatzmotor vorzugsweise als Direktantrieb, also unmittelbar auf den Antriebsstrang wirkt. Der Pressenmotor, beispielsweise ein herkömmlicher Torquemotor, der entweder direkt oder über eine Getriebestufe auf den Antriebsstrang wirkt, dient in diesem Fall, wenn überhaupt, nur noch zur Bereitstellung eines vergleichsweise geringen Teils der benötigten Presskraft. Stattdessen dient er, je nach Ausführung, ausschließlich oder im Wesentlichen zum Beschleunigen des Stößels beim Wiederhochfahren im Anschluss an den Umformvorgang. Vor dem erneuten Erreichen des Umformbereiches erfolgt durch den Pressenmotors ein Abbremsen des Stößels und anschließend ein langsames Durchfahren des Umformbereiches. Der Zusatzmotor dient ausschließlich zum Aufbringen zusätzlicher Kräfte zum Erzeugen der benötigten Presskraft. Er greift ein, wenn der Umformvorgang beginnt, d.h. nach dem Abbremsen des Stößels. Mit anderen Worten wird der Zusatzmotor nur während der Umformung bestromt und dient dann zur Unterstützung des Pressenmotors. Zu der Bewegung des Stößels zwischen den Umformbereichen trägt der Zusatzmotor je nach Ausführung nicht oder nur unwesentlich bei.

Dass der radiale Segmentmotor und/oder der wenigstens eine axiale Segmentmotor nur teilweise bestückt ist, bedeutet, dass dieser nicht über den gesamten Umfang des Rotors (360°) bestückt ist. Die Teilbestückung betrifft sowohl das Primärteil, als auch das Sekundärteil. Mit anderen Worten ist der Zusatzmotor nur in einem Teilbereich gewickelt und mit Magneten versehen. Dieser Teilbereich entspricht vorzugsweise dem Umformbereich, also beispielsweise einem Bereich von 30° vor UT (unterer Totpunkt). Mit anderen Worten ist die Größe des bestückten Teilbereiches an die Größe des Arbeitsbereiches angepasst, wodurch eine unnötige, über den Arbeitsbereich hinausgehende Bestückung des Segmentmotors vermieden wird.

Bei der oben geschilderten Variante ist es nicht mehr notwendig, dass der Pressenmotor hohe Drehzahlen erreicht. Wird also der erfindungsgemäße kombinierte Radial-Axial-Motor als Zusatzmotor mit einem herkömmlichen Pressenmotor eingesetzt, so wie oben beschrieben, kann der Pressenmotor kleiner als bisher üblich dimensioniert sein. Der Strombedarf sinkt bei gleichem Drehmoment. Der verwendete Umrichter benötigt nur noch ein kleineres und damit kostengünstigeres Leistungsteil. Zudem kann für den Pressenmotor ein optimierter Arbeitsbereich bzw. Betriebspunkt ausgelegt werden. Dies führt zu einer verbesserten Drehmomentkonstante. Zugleich kann auch der als Zusatzmotor dienende Kombinationsmotor kostenoptimiert aufgebaut sein, da dieser nicht mehr für die maximale Drehzahl zwischen den Umformbereichen ausgelegt sein. Die maximale Geschwindigkeit des Zusatzmotors ist die Umformgeschwindigkeit.

Anders als bei dem oben geschilderten Anwendungsbeispiel wird gemäß der vorliegenden Erfindung kein zusätzlicher Pressenmotor zur Bewegung des Stößels zwischen den Umformbereichen mehr benötigt. Erfindungsgemäß ist entweder der radiale Segmentmotor, oder aber der wenigstens eine axiale Segmentmotor teilbestückt. Im Ergebnis dient derjenige Motor des Antriebs, der vollbestückt ist, als Pressenmotor zum Beschleunigen und Abbremsen des Stößels zwischen den Umformbereichen und der teilbestückte Segmentmotor zum Aufbringen der zusätzlichen Kräfte zum Erzeugen der benötigten Presskraft. Vorzugsweise wird der radiale Segmentmotor die Funktion des Pressenmotors übernehmen, während der wenigstens eine axiale Segmentmotor einen Zusatzmotor zum Bereitstellen der Presskraft darstellt.

Bei dem bestückten Teilbereich des Segmentmotors muss es sich nicht um einen geschlossenen Teilbereich handeln. So kann es vorteilhaft sein, zwei oder mehrere voneinander beabstandete Teilbereiche zu bestücken. Von Vorteil ist es insbesondere, wenn zwei sich gegenüberliegende Segmente des Motors bestückt sind, mit anderen Worten die bestückten Segmente um 180° versetzt zueinander angeordnet sind. Dadurch lässt sich nicht nur eine Unwucht des Rotors vermeiden. Gleichzeitig kann das doppelte Drehmoment erreicht werden. Ist stattdessen nur die Bestückung eines einzelnen Segments vorgesehen, dann ist vorteilhafterweise zur Vermeidung einer Umwucht auf der gegenüberliegenden Seite des Rotors ein Gegengewicht angebracht.

Mit einer solchen Ausgestaltung ist es möglich, große Drehmomente bei kompakter Bauform mit einer besonders vorteilhaften Kombination aus Presskraft und Dynamik bei vergleichsweise geringen konstruktivem Aufwand zu verbinden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen:

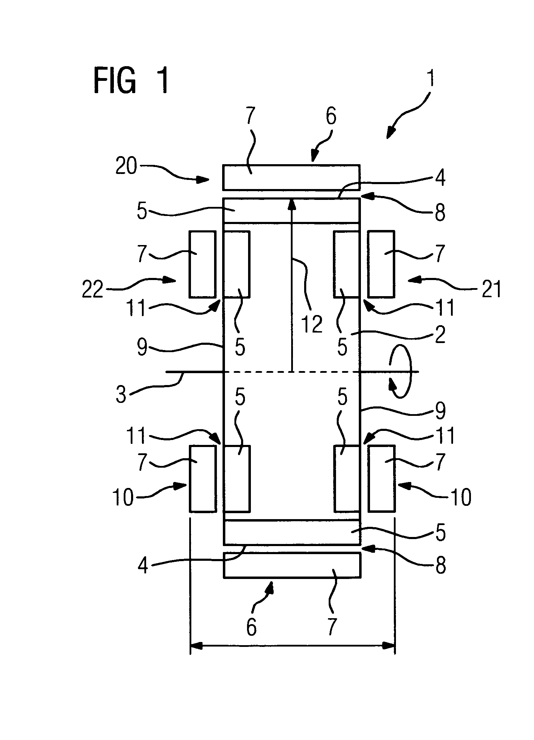

- FIG 1: eine Seitenansicht des Antriebs einer Presse,
- FIG 2: eine Vorderansicht des Antriebs aus FIG 1,
- FIG 3: eine Vorderansicht eines teilbestückten Antriebs.

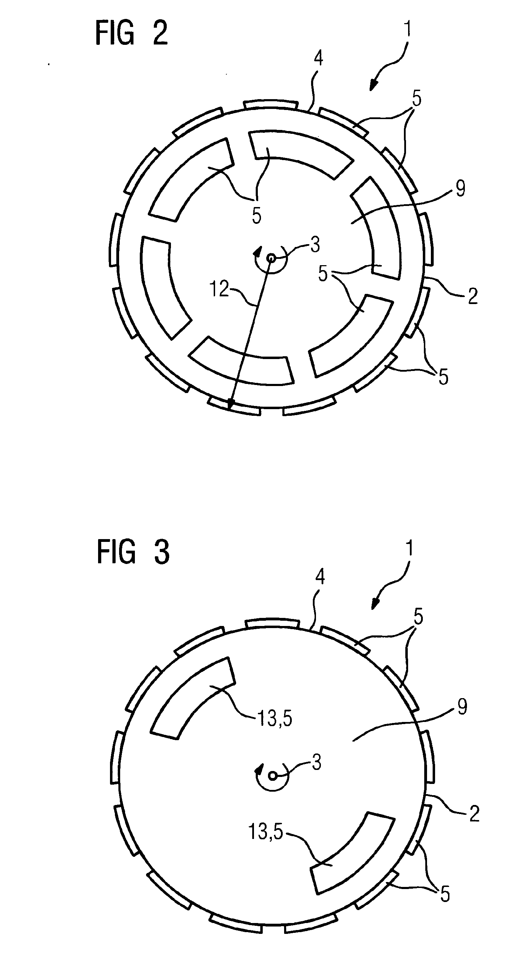

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion. In den FIG 2 und 3 sind aus Gründen der Übersichtlichkeit nur die am Rotor angebrachten Sekundärteile dargestellt.

Die Erfindung wird beispielhaft anhand einer Exzenterpresse mit Servoantrieb erläutert, die mit Hilfe einer Exzenterwelle die Presskraft erzeugt. Dargestellt ist ein als Innenläufer ausgeführter elektromotorischer Antrieb 1 als ein Teil des Antriebsstrangs der Presse. Der zylindrische Rotor 2 des Antriebs 1 ist direkt mit der Welle 3 verbunden. Der Antrieb 1 wirkt somit als Direktantrieb unmittelbar auf den Antriebsstrang. Übersetzungsgetriebe, Zahnräder oder dergleichen kommen nicht zur Anwendung. Primär- und Sekundärteile des Antriebs 1 sind zu Gruppen zusammengefasst und dadurch segmentweise angeordnet.

In diesem Beispiel sind alle Flächen des Rotors 2 mit Antriebssegmenten versehen, um den zur Verfügung stehenden Bauraum optimal zur Drehmomenterzeugung auszunutzen. An der Oberfläche des Umfangs 4 des Rotors 2 angeordnete Permanentmagnete 5 dienen als Sekundärteil-Antriebssegmente eines radialen Segmentmotors 20 als Kernstück des Antriebs 1. Entsprechend ist ein erster Stator 6 mit Wicklungen 7 als Primärteil-Antriebssegmente als ein den Rotor 2 umfassender Ring ausgeführt. Der Luftspalt 8 dieses Radialmotors 20 verläuft axial, also parallel zu der Rotationsachse der Welle 3.

Bei den mit dem radialen Segmentmotor 20 kombinierten axialen Segmentmotoren 21, 22 (Scheibensegmentmotoren) sind weitere Permanentmagnete 5 als Sekundärteil-Antriebssegmente auf den als Antriebsscheiben dienenden Stirnflächen 9 des Rotors 2 des Radialmotors 20 kreisförmig, dem Umfang der rotierenden Scheibe folgend angeordnet. Die entsprechenden zweiten Statoren 10 mit Wicklungen 7 als Primärteil-Antriebssegmente der axialen Segmentmotoren 21, 22 sind in axialer Richtung den Stirnseiten 9 des gemeinsamen Rotors 2 gegenüberliegend orientiert. Die Luftspalte 11 dieser Axialmotoren 21, 22 verlaufen radial, also parallel zu dem Radius 12 des Rotors 2.

Im Ergebnis wird ein Radialmotor 20, bei dessen Betrieb sich ein radial gerichteter magnetischer Fluss im Luftspalt 8 ergibt, mit zwei Axialmotoren 21, 22 kombiniert, bei deren Betrieb sich ein axial gerichteter magnetischer Fluss im Luftspalt 11 ergibt. Bei dem resultierenden Antrieb 1 verläuft die magnetische Flussdichte mit anderen Worten sowohl radial, als auch axial. Der benötigte Bauraum, insbesondere die axiale Baulänge, ist vergleichsweise gering.

In einer weiteren, in FIG 3 abgebildeten erfindungsgemäßen Ausführungsform sind die beidseitig an den Stirnseiten 9 des Rotors 2 angeordnete Axialmotoren 21, 22 nur teilweise bestückte Segmentmotoren. Mit anderen Worten umfassen die Axialmotoren 21, 22 teilbestückte Spulensysteme (Primärteile) und mit den Spulensystemen zusammenwirkende teilbestückte Dauermagnetsysteme (Sekundärteile). Die Teilbestückung deckt dabei den Arbeitsbereich der Presse ab, beispielsweise 30°. Der Radialmotor 20 bleibt voll bestückt.

Bei dem dargestellten Beispiel werden zwei bestückte Segmente 13 verwendet. Die Segmente 13 sind um 180° versetzt zueinander angeordnet, so dass sie sich gegenüberliegen. Dadurch wird eine Unwucht des Rotors 2 vermieden.

Im Umformbereich werden die Axialmotoren 21, 22 bestromt, so dass mit deren Hilfe die erforderliche Presskraft aufgebracht wird. Anschließend dient der Radialmotor 20 dazu, den Stößel der Presse wieder zu beschleunigen und vor dem nächsten Umformvorgang abzubremsen. Dann erfolgt ein erneutes langsames Durchfahren des Umformbereiches.

## Patentansprüche

1. Presse mit einem elektrischen Antrieb (1), bei dem Primärund Sekundärteil als Segmente ausgebildet sind, wobei der Antrieb (1) umfasst:
- einen mit einer Welle (3) verbundenen Rotor (2), der an seinem Umfang (4) radiale Antriebssegmente (5) und an wenigstens einer seiner Stirnseiten (9) axiale Antriebssegmente (5) aufweist,
- einen ersten Stator (6), dessen Antriebssegmente (7) mit den radialen Antriebssegmenten (5) des Rotors (2) einen radialen Segmentmotor (20) bilden und
- wenigstens einen zweiten Stator (10), dessen Antriebssegmente (7) mit den axialen Antriebssegmenten (5) an der wenigstens einen Stirnseite (9) des Rotors (2) wenigstens einen axialen Segmentmotor (21) bilden,
**dadurch gekennzeichnet, dass** der radiale Segmentmotor (20) oder der wenigstens eine axiale Segmentmotor (21, 22) derart teilbestückt ist, dass er nur in einem Teilbereich gewickelt und mit Magneten versehen ist, und
dass derjenige Segmentmotor (20; 21, 22) des Antriebs (1), der vollbestückt ist, als Pressenmotor zum Beschleunigen und Abbremsen des Stößels zwischen den Umformbereichen und der teilbestückte Segmentmotor (20; 21, 22) zum Aufbringen der zusätzlichen Kräfte zum Erzeugen der benötigten Presskraft dient.

2. Presse nach Anspruch 1, **dadurch gekennzeichnet, dass** der teilbestückte Segmentmotor (20; 21, 22) zwei oder mehrere voneinander beabstandete, bestücke Teilbereiche aufweist.

3. Presse nach Anspruch 1, **dadurch gekennzeichnet, dass** der Rotor (2) axiale Antriebssegmente (5) an beiden Stirnseiten (9) aufweist und zwei zweite Statoren (10) vorgesehen sind, deren Antriebssegmente (7) mit den axialen Antriebssegmenten (5) an den beiden Stirnseiten (9) des Rotors (2) zwei axiale Segmentmotoren (21,22) bilden.

4. Presse nach Anspruch 1 oder 3, **dadurch gekennzeichnet, dass** es sich bei den an dem Rotor (2) angebrachten Antriebssegmenten (5) um Sekundärteil-Elemente und bei den an den Statoren (6,10) angebrachten Antriebssegmenten (7) um Primärteil-Elemente handelt.

5. Presse nach einem der Ansprüche 1 bis 4, **dadurch gekennzeichnet, dass** ein Teilbereich des teilbestückten Segmentmotors (20; 21, 22) bestückt ist, der dem Umformbereich der Presse entspricht.

6. Presse nach einem der Ansprüche 1 bis 5, **dadurch gekennzeichnet, dass** der radiale Segmentmotor (20) die Funktion des Pressenmotors übernimmt, während der wenigstens eine axiale Segmentmotor (21, 22) einen Zusatzmotor zum Bereitstellen der Presskraft darstellt.

7. Presse nach einem der Ansprüche 1 bis 6, **dadurch gekennzeichnet, dass** der Antrieb (1) ein Servoantrieb und die Presse eine Exzenterpresse ist.

## Claims

1. Press with an electric drive (1), in which the primary and secondary part are embodied as segments, wherein the drive (1) includes:
- a rotor (2) connected to a shaft (3), said rotor comprising radial drive segments (5) on its periphery (4) and axial drive segments (5) on at least one of its front faces (9),
- a first stator (6), the drive segments (7) of which form a radial segment motor (20) with the radial drive segments (5) of the rotor (2) and
- at least one second stator (10), the drive segments (7) of which form at least one axial segment motor (21) with the axial drive segments (5) on the at least one front face (9) of the rotor (2),
**characterised in that** the radial segment motor (2) or the at least one axial segment motor (21, 22) is partially equipped such that it is only wound in a subregion and is provided with magnets, and
that the segment motor (20; 21, 22) of the drive (1), which is fully equipped, is used as a press motor to accelerate and brake the plunger between the forming regions and the partially equipped segment motor (20; 21, 22) for applying the additional forces for generating the required press force.

2. Press according to claim 1, **characterised in that** the partially equipped segment motor (20; 21, 22) comprises two or more equipped subregions arranged at a distance from one another.

3. Press according to claim 1, **characterised in that** the rotor (2) comprises axial drive segments (5) on both front faces (9), and two second stators (10) are provided, the drive segments (7) of which form two axial segment motors (21, 22) with the axial drive segments (5) on the two front faces (9) of the rotor (2).

4. Press according to claim 1 or 3, **characterised in that** the drive segments (5) attached to the rotor (2) are secondary part elements, and the drive segments (7) attached to the stators (6, 10) are primary part elements.

5. Press according to one of claims 1 to 4, **characterised in that** a subregion of the partially equipped segment motor (20; 21, 22) is equipped, which corresponds to the forming region of the press.

6. Press according to one of claims 1 to 5, **characterised in that** the radial segment motor (20) assumes the function of the press motor, while the at least one axial segment motor (21, 22) represents an additional motor for providing the press force.

7. Press according to one of claims 1 to 6, **characterised in that** the drive (1) is a servo drive and the press is an eccentric press.

## Revendications

1. Presse ayant un entraînement (1) électrique, dans lequel la partie primaire et la partie secondaire sont constituées sous forme de segments, l'entraînement (1) comprenant :
- un rotor (2) qui est relié à un arbre (3) et qui a, sur son pourtour (4), des segments (5) d'entraînement radiaux et sur au moins l'un de ses côtés (9) frontaux des segments (5) d'entraînement axiaux,
- un premier stator (6), dont les segments (7) d'entraînement forment avec les segments (5) d'entraînement radiaux du rotor (2) un moteur (20) segmenté radial et
- au moins un deuxième stator (10), dont les segments (7) d'entraînement forment avec les segments (5) d'entraînement axiaux sur le au moins un côté (9) frontal du rotor (2) au moins un moteur (21) segmenté axial, **caractérisée en ce que** le moteur (20) segmenté radial ou le au moins un moteur (21, 22) segmenté axial est équipé partiellement de manière à être bobiné et muni d'aimants seulement dans une zone partielle et
**en ce que** le moteur (20, 21, 22) segmenté de l'entraînement (1), qui est équipé complètement, sert de moteur de presse pour l'accélération et le freinage du poinçon entre les zones de déformation et le moteur (20, 21, 22) segmenté équipé partiellement sert à appliquer des forces supplémentaires pour la production de la force de la presse qui est nécessaire.

2. Presse suivant la revendication 1, **caractérisée en ce que** le moteur (20, 21, 22) segmenté et équipé partiellement a deux ou plusieurs zones partielles équipées à distance les unes des autres.

3. Presse suivant la revendication 1, **caractérisée en ce que** le rotor (2) a des segments (5) d'entraînement axiaux aux deux côtés (9) frontaux et il est prévu deux stators (10) dont les segments (7) d'entraînement forment avec les segments (5) d'entraînement axiaux aux deux côtés (9) frontaux du rotor (2) deux moteurs (21, 22) segmentés axiaux.

4. Presse suivant la revendication 1 ou 3, **caractérisée en ce que** les segments (5) d'entraînement mis sur le rotor (2) sont des éléments de partie secondaire et les segments (7) d'entraînement mis sur les stators (6) sont des éléments de partie primaire.

5. Presse suivant l'une des revendications 1 à 4, **caractérisée en ce qu'**une zone partielle du moteur (20, 21, 22) segmenté et équipé partiellement qui correspond à la zone de déformation de la presse, est équipée.

6. Presse suivant l'une des revendications 1 à 5, **caractérisée en ce que** le moteur (20) segmenté radial assume la fonction du moteur de presse, tandis que le au moins un moteur (21, 22) segmenté axial constitue un moteur supplémentaire pour obtenir la force de la presse.

7. Presse suivant l'une des revendications 1 à 6, **caractérisée en ce que** l'entraînement (1) est une servocommande et la presse est une presse à excentrique.
